# EUROPEAN PATENT SPECIFICATION

(11) **EP 2 105 359 B1**
(45) Date of publication and mention of the grant of the patent: **13.04.2011**
(21) Application number: 09004079.1
(22) Date of filing: 21.03.2009
(51) Int. Cl.: B60R 22/195

(54) **Preloader**
Vorauflader
Préchargeur

(30) Priority: 27.03.2008 JP 2008084300
(43) Date of publication of application: 30.09.2009
(73) Proprietor: Kabushiki Kaisha Tokai-Rika-Denki-Seisakusho, Niwa-gun, Aichi 480-0195 (JP)
(72) Inventor: Ukita, Masaru, Niwa-gun Aichi-ken (JP); Sugiyama, Motoki, Niwa-gun Aichi-ken (JP); Muromachi, Tetsushi, Niwa-gun Aichi-ken (JP)
(74) Representative: Rüger, Barthelt & Abel Patentanwälte

(56) References cited:
- US-A- 5 887 897
- US-A1- 2003 122 362

## Description

### BACKGROUND OF THE INVENTION

### Field of the Invention

The present invention relates to a preloader capable of increasing a tensile force of a webbing belt by pulling an anchor to which an end of the webbing belt is fastened or a buckle device in which a tongue provided at the webbing belt is attached constituting a seat belt device of a vehicle when rapid deceleration of the vehicle.

### Related Art

The preloader (pretensioner) disclosed in Japanese Patent Application Laid-Open (JP-A) No. 2007-62600 (patent document 1) and Japanese Patent Application Laid-Open JP-A No. 2007-76493 (patent document 2) has a housing at which a cylinder and a gas generator are mounted. In this housing, there is formed a through path that passes through this housing, and a wire connected at a longitudinal direction base end to a piston which is inside the cylinder passes through the path and extends to the outside of the housing.

Further, at the housing, a high-pressure gas injection path where a high-pressure gas from the gas generator passes is joined, and when the high-pressure gas passing through the high-pressure injection path is supplied to the cylinder, the pressure of the gas makes a piston slide inside the cylinder, by this, the wire is pulled.

Meanwhile, leakage of the high-pressure gas from the through hole leads to loss of the pressure for sliding the piston. For this reason, the preloader disclosed in each of the patent documents 1 and 2 has a tubular protection seal member provided at the high-pressure gas injection path, and the protection seal member is brought into contact with the opening end at the high-pressure injection path side of the through hole thereby to prevent or suppress the leakage of high-pressure gas from the high-pressure gas injection path to the through hole.

In such a structure that the protection seal member is provided in the high-pressure gas injection path, there is need to make a space for flow of the high-pressure gas between the protection seal member and the inner circumferential part of the high-pressure gas injection path. Therefore, the high-pressure gas injection path becomes enlarged, which leads to upsizing of the housing and then the preloader.

US 2003/0122362 A1, which is considered to be the next prior art document and forms the basis for the preamble of independent claim 1, discloses a preloader having a cylinder with a piston slidably received therein, a wire as a connecting member, a preloader main body with a guide hole formed therein and serving as a connecting member passage, a gas passage with a gas generating unit attached thereto, and a packing provided in the preloader main body and serving as a sealing member for sealing the region between the gas passage and the connecting member passage. The packing, which is cylindrically shaped for receiving the wire therethrough, is disposed in a packing chamber arranged between the gas passage and the guide hole at the entrance to the guide hole. A guard pipe, which serves as a protecting member, is disposed within the gas passage such that the packing is received and compressed between an end surface of the guard pipe and a packing seat of the packing chamber, the packing, thus, being hardly exposed to the gas passage.

A similar preloader structure having a sealing member disposed directly adjacent to the gas passage is further disclosed in US 5 887 897 A.

### SUMMARY OF THE INVENTION

In view of the above-mentioned fact, the present invention has an object to provide a preloader capable of suppressing pressure loss of a gas for driving a piston efficiently and further suppressing upsizing of a passage for the gas.

To achieve this object the present invention provides a preloader as claimed in independent claim 1. Preferred embodiments of present invention are subject-matter of dependent claims.

An embodiment of present invention is a preloader including: a cylinder that slidably accommodates therein a piston slidably; a connecting member, one end portion of which is connected to an anchor to which a one end portion in a longitudinal direction of a webbing belt of a seat belt device is connected, or a buckle to which a tongue provided at an intermediate portion in the longitudinal-direction of the webbing belt is attached, and the other end portion of which is pulled by the piston sliding inside the cylinder from one end of the cylinder to the other end of the cylinder; a preloader main body in which a connecting member passage is formed and to which the one end of the cylinder is attached, the connecting member passage having another end opening at an outer surface of the preloader main body and the connecting member passing inside the connecting member passage; a gas passage that is formed in the preloader main body such that one end of the gas passage communicates to the one end of the cylinder and one end of the connecting member passage is opened at an intermediate portion of the gas passage; a gas generating unit, attached to the other end of the gas passage, that generates gas by being activated to send the generated gas into the gas passage; and a sealing member that is accommodated in a sealing member accommodation portion formed in the preloader main body at an intermediate portion of the connecting member passage, the sealing member sealing a portion between the one end of the connecting member passage and the other end of the connecting member passage.

According to present invention, the sealing member accommodation portion opens, at the outer surface of the preloader main body which is directed in a direction crossing a passage direction of the connecting member in the sealing member accommodation portion, at such a size that the sealing member can be accommodated in the sealing member accommodation portion.

In the preloader according to present invention, the gas generating unit mounted on the preloader main body is activated to generate the gas. The gas generated by the gas generating unit is sent through the gas passage formed in the preloader main body into the cylinder. When the gas is sent to the cylinder, this gas pressure makes the piston slide inside the cylinder toward the other end side or the cylinder. As the connecting member is pulled by the thus-sliding piston and moved, the buckle or anchor in which the one end of the connecting member is caught is pulled.

When the buckle is pulled, the webbing belt at which the tongue is provided is pulled via the tongue mounted on the buckle. On the other hand, when the anchor is pulled, the webbing belt one end which is caught in the anchor is pulled. In this way, as the webbing belt is pulled, the occupant body with the webbing belt on is firmly restrained by the webbing belt.

Here, the connecting member passes through the gas passage and is entered in the connecting member passage the one end of which is opened at the intermediate portion of the gas passage. Further, the connecting member passes through the connecting member passage and gets out of the other end of the connecting member passage that is open in the outer surface of the preloader main body to the outside of the preloader main body. That is, the gas passage and the connecting member passage are communicated (linked) to each other. However, the sealing member accommodation portion formed in the preloader main body at the intermediate portion of the connecting member passage is provided with the sealing member, which seals the midpoint between the one end of the connecting member passage and the other end. This prevents or effectively suppresses gas leakage via the connecting member passage.

Besides, as the sealing member accommodation portion on which the sealing member is provided is formed at the intermediate portion of the connecting member passage, in the preloader according to this aspect of the present invention, the sealing member is not provided at the gas passage for preventing or suppressing gas leakage from the connecting member passage. Hence, the gas passage is not required to have a size that allows passage of the gas even after the sealing member is provided in the gas passage, so the gas passage can be downsized. This enables downsizing the preloader main body.

In the preloader according to a further embodiment of present invention, the preloader further includes a regulating portion facing the sealing member at the one end side of the connecting member passage, that regulates moving of the sealing member toward the one end side of the connecting member passage by interfering with the sealing member.

In the preloader according to a further embodiment of present invention, when the sealing member accommodated in the sealing member accommodation portion tries to move to the one end side of the connecting member passage, the regulating portion provided in the sealing member accommodation portion interferes with the sealing member. This prevents movement of the sealing member toward the one end side of the connecting member passage. Hence, when the piston slides by gas pressure to move the connecting member, it is possible to prevent or effectively suppress movement of the sealing member following the connecting member, thereby maintaining high sealing performance by the sealing member.

In a preloader according to a further embodiment of present invention, a flange part, that has a shape larger than an opening shape of the sealing member accommodation portion when seen in the direction crossing the passage direction of the connecting member in the sealing member accommodation portion, is formed at the sealing member, and the flange part contacts the outer surface of the preloader main body in a state in which the sealing member is accommodated in the sealing member accommodation portion.

In a preloader according to a further embodiment of present invention, an opening is further formed at an outer surface of the preloader main body that is opposite to the outer surface of the preloader main body which is directed in the direction crossing the passage direction of the connecting member in the scaling member accommodation portion.

In a preloader according to a further embodiment of present invention, an opening is further formed at an outer surface of the preloader main body that crosses to the outer surface of the preloader main body which is directed in the direction crossing the passage direction of the connecting member in the sealing member accommodation portion.

In a preloader according to a further embodiment of present invention, both openings are communicated with each other.

In the preloader according to present invention, the sealing member accommodation portion is opened at the outer surface of the preloader main body.

Further, in the preloader according to a further embodiment of present invention, the opening is further formed at the outer surface of the preloader main body that is opposite to the outer surface of the preloader main body which is directed in the direction crossing the passage direction of the connecting member in the sealing member accommodation portion.

In the preloader according to a further embodiment of present invention, the opening is further formed at the outer surface of the preloader main body that crosses to the outer surface of the preloader main body which is directed in the direction crossing the passage direction of the connecting member in the scaling member accommodation portion.

Moreover, in the preloader according to a further embodiment of present invention, both openings are communicated with each other.

Here, the size of the opening of the sealing member at the outer surface of the preloader main body is such that the sealing member can be easily accommodated in the sealing member accommodation portion from the outer surface side of the preloader main body. Besides, the opening direction of the sealing member accommodation portion at the outer surface of the preloader main body crosses the passage direction of the connecting member inside the sealing member accommodation portion. When the connecting member moves inside the sealing member accommodation portion, the sealing member is prevented from following the connecting member and getting out from the sealing member accommodation portion, and therefore, so there is no need for any stopper for suppressing or preventing the sealing member from getting out of the sealing member accommodation portion.

Moreover, in the preloader according to a further embodiment of the present invention, the flange part, that has a shape larger than an opening shape of the sealing member accommodation portion when seen in the direction crossing the passage direction of the connecting member in the sealing member accommodation portion, is formed at the sealing member, and the flange part contacts the outer surface of the preloader main body in a state in which the scaling member is accommodated in the sealing member accommodation portion. Therefore, the gas sealing performance by the sealing member is further improved.

As described up to this point, the preloader of this invention makes it possible to efficiently suppress pressure loss of the gas for driving the piston and thereby to eliminate the need to upsize the gas path.

### BRIEF DESCRIPTION OF THE DRAWINGS

Embodiments of the present invention will be described in detail with reference to the following figures, wherein:
Fig. 1 is a cross sectional view showing a structure of a preloader according to an embodiment of the invention;
Fig. 2 is a cross sectional view taken along the line 2-2 of Fig. 1;
Fig. 3 is an exploded perspective view showing the structure of substantial parts of the preloader according to the embodiment of the invention;
Fig. 4 is a cross sectional view like Fig. 2, showing a preloader according to a modification of the embodiment of the invention;
Fig. 5 is an exploded perspective view showing substantial parts of a preloader according to another modification of the embodiment of the invention;
Fig. 6 is a cross sectional view like Fig. 2, showing a preloader according to a modification of the embodiment of the invention;

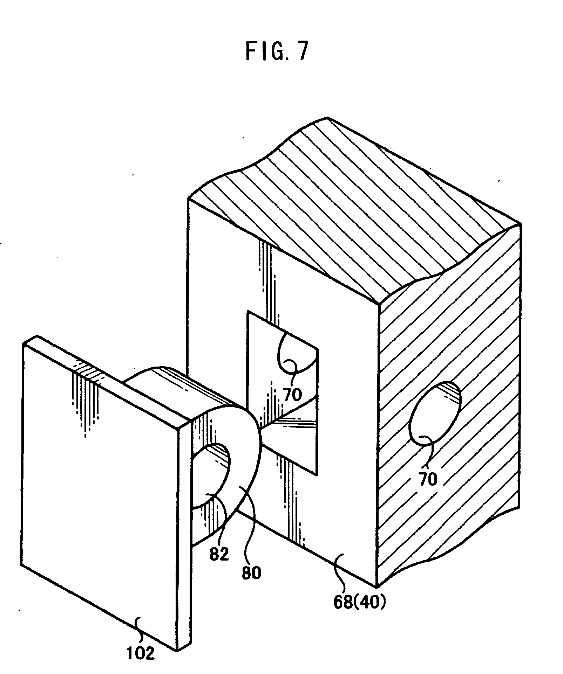

Fig. 7 is an exploded perspective view showing substantial parts of a preloader according to another modification of the embodiment of the invention; and

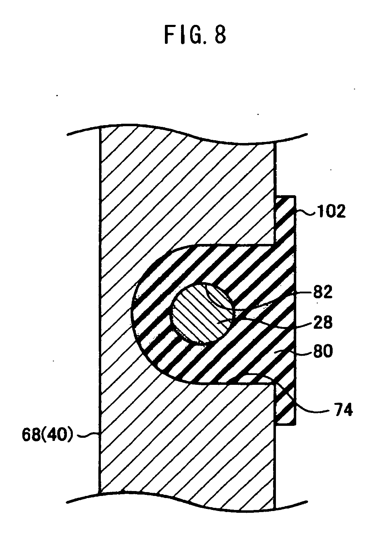

Fig. 8 is a cross sectional view like Fig. 2, showing a preloader according to yet another modification of the embodiment of the invention;

### DETAILED DESCRIPTION OF THE INVENTION

### <Structure of the present embodiment>

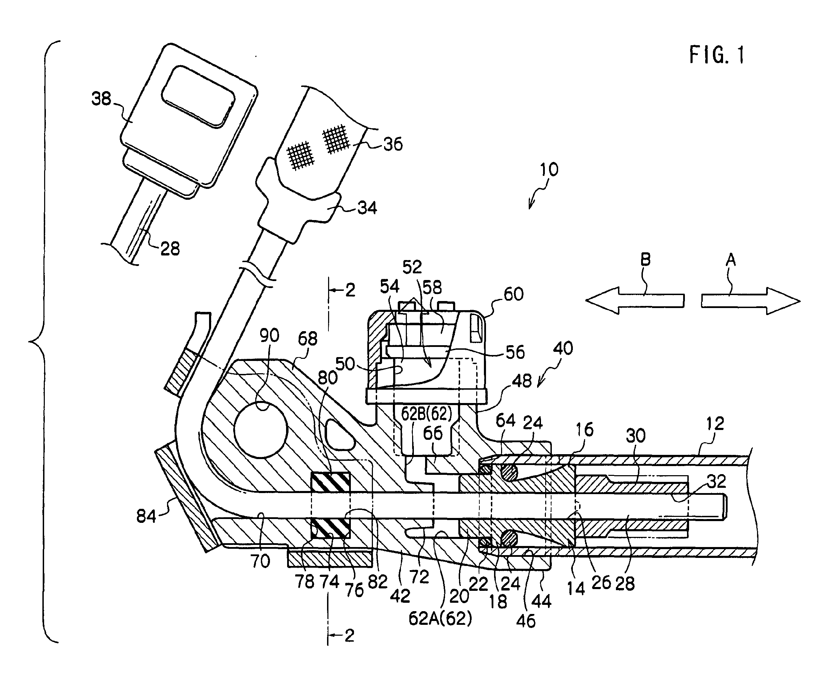

Fig. 1 is a cross sectional view showing the structure of a preloader 10 according to one embodiment of the present invention.

As shown in this figure, the preloader 10 has a cylinder 12. The cylinder 12 is formed to have tube shape (for example, cylindrical shape with or without bottom). Inside the cylinder 12, a piston 14 is housed which is formed by metal-forging. The piston 14 has a piston main body 16. The piston main body 16 has the outer diameter which gradually increases toward the tip end (another end) side of the cylinder 12 (in the direction of the arrow A in Fig. 1), and, at least, the outer peripheral shape of an end of the piston main body 16 at the tip end side of the cylinder 12 is formed into cone shape, by cutting the forged work piece, so as to be almost identical to the inner peripheral shape of the cylinder 12.

At an end of the piston main body 16 at the base end (one end) side of the cylinder 12 (in the direction of the arrow B in Fig. 1), a flange part 18 is formed having an outer peripheral shape almost identical to the inner peripheral shape of the cylinder 12, and the flange part 18 is approximately coaxial with the end of the piston main body 16 at the tip end side of the cylinder 12. This flange part 18 and the end of the piston main body 16 at the tip end side of the cylinder 12 are slidably in contact with the inner part of the cylinder 12, and the piston 14 can slide between the tip end of the cylinder 12 and the other end thereof. At an end of the flange part 18 at the base end side of the cylinder 12, a small diameter part 20 is formed having a smaller outer diameter than that of the flange part 18 and approximately coaxial with the flange part 18.

On the outer peripheral part of the small diameter part 20, an O ring 22 is fit which is made of a rubber material or synthetic resin material having the almost same level of elasticity as the rubber and formed into ring shape. The O ring 22 (whole region thereof along the outer circumference of the small diameter part 20) is closely fit on the small diameter part 20 and in contact with the inner peripheral part of the cylinder 12. The O ring 22 seals the boundary by the O ring 22 between the one end and the other end of the cylinder 12.

Here, this preloader 10 is structured to have the O ring 22 fit on the small diameter part 20 formed at the end of the flange part 18 but not is structured to form a ring-shaped groove at the piston 14 for fitting the O ring 22 therein. Therefore, it becomes possible to simplify the shape of the piston 14 and to reduce working steps for forming the piston 14.

Meanwhile, at the side portion of the flange part 18 at the tip end side of the cylinder 12, plural clutch balls 24 are arranged at given intervals along the outer circumference of the piston main body 16. Each of the clutch balls 24 has a set diameter of half or less of a difference between the inner diameter of the cylinder 12 and the outer diameter of the piston main body 16 in the vicinity of the end at the flange part 18 side of the piston main body 16. When the piston 14 moves from the tip end of the cylinder 12 to the base end of the cylinder 12 (that is, the piston 14 slides inside the cylinder 12 in the direction of the arrow B in Fig. 1), each clutch ball 24 moves on the outer peripheral surface (inclined surface) of the piston main body 16 by inertia, so, the clutch ball 24 is sandwiched and deformed between the outer peripheral surface of the piston main body 16 and the inner peripheral surface of the cylinder 12. This causes increase of friction between the outer peripheral surface of the piston main body 16 and the clutch ball 24 and friction between the inner peripheral surface of the cylinder 12 and the clutch ball 24, and prevents sliding of the piston 14 toward the base end of the cylinder 12.

The piston 14 has a through hole 26 formed therein. The through hole 26 has an end which is open at a face opposite to the flange part 18 of the piston main body 16 and the other end which is open at a face of the small diameter part 20 opposite to the flange part 18. The preloader 10 has a wire 28 as connecting member, which passes through the through hole 26. At the side portion of the piston 14 at the tip end side of the cylinder 12, a piece 30 is provided. The piece 30 has a through hole 32 formed therein, through which the wire 28 passes. The wire 28 which passes through the through hole 32 to the side of the piece 30 opposite to the piston 14 is subject to process which prevents the wire from being pulled out, so the wire 28 is formed integral with the piece 30. In this way, the wire 28 is connected integrally with the piece 30, it is prevented that the wire 28 is passing through the through hole 26 so the wire is pulled out at the side of the piston 14 opposite to the piece 30.

The end of the wire 28 opposite to side where the piece 30 is provided is fastened to an anchor plate 34 as an anchor structuring a three-point type seat belt device which is one aspect of the vehicle seat belt device for example. Detailed illustration is omitted here, however, the anchor plate 34 is provided in the vicinity to the floor of the vehicle at one width-directional side of the seat installed inside the vehicle. The distal end of a long and strip-shaped webbing belt 36 structuring the three-point type seat belt is caught in this anchor plate 34. The webbing belt 36 at the base end side passes through a through anchor mounted in the vicinity of the ceiling of the vehicle at one width-directional side of the seat and is folded back downward, and the base end side of the webbing belt 36 is caught in a spool of a webbing winding device provided in the vicinity of the floor of the vehicle at the one width-directional side of the seat.

Between the above-mentioned through anchor and the anchor plate 34, the webbing belt 36 passes through a tongue plate. The occupant seated on the seat draws the webbing belt 36 from the spool of the webbing winding device such that the webbing belt 36 is across the front of the occupant body, and in this state, inserts the tongue plate into the buckle 38 provided in the vicinity of the floor of the vehicle on the width-directional other side of the seat. Thereby, the webbing belt 36 is worn on the occupant body.

Here, in the above description, the end of the wire 28 opposite to the piece 30 provided side is caught in the anchor plate 34. However, the end of the wire 28 opposite to the piece 30 provided side may be caught in the buckle 38.

Here, as shown in Fig. 1, the preloader 10 has a base cartridge 40 as a pretensioner main body. The base cartridge 40 has a main body 42, in which a cylinder insertion part 44 is formed. In the cylinder insertion part 44, an insertion hole 46 is formed. The end of the insertion hole 46 opens at the inner peripheral surface of the cylinder insertion part 44. The inner diameter of the opening end of the cylinder insertion part 44 is slightly larger than the outer diameter at the base end of the cylinder 12 so that the cylinder 12 can be inserted, from the end thereof, via the opening end of the insertion hole 46. For example, a female screw (not shown) is formed in the inner peripheral surface of the insertion hole 46.

Corresponding to this female screw, a male screw (not shown) is formed on the base end side outer peripheral surface of the cylinder 12. Engagement of female screw of this insertion hole 46 with the male screw allows connection of the cylinder 12 to the base cartridge 40.

Meanwhile, in the main body 42, there is formed a gas generator mount part 48. The gas generator mount part 48 is formed to the side of the main body 42 in the direction crossing to (particularly, in this embodiment approximately orthogonal to) the opening direction of the insertion hole 46 in the cylinder insertion part 44. In the gas generator mount part 48, a gas generator mount hole 50 is formed. There is a cap 60 which has an end opening at a face crossing to (particularly, in this embodiment approximately orthogonal to) the opening direction of the insertion hole 46 among outer faces of the gas generator mount part 48.

At the gas generator mount part 48, a gas generator 52 as gas generating unit is mounted. The gas generator 52 has a fit part 54. The fit part 54 has an outer peripheral shape almost equal to the inner peripheral shape of the gas generator mount hole 50 and the gas generator 52 can be inserted via the opening end of the gas generator mount hole 50. At an end of the gas generator 52 (upper end part in Fig. 1), there is formed a flange part 56 having an outer peripheral shape larger than the outer peripheral shape of the gas generator 52. When the fit part 54 is inserted into the gas generator mount hole 50, the flange part 56 interferes with the end of the gas generator mount part 48 at the opening end side of the gas generator mount hole 50.

A head part 58 is formed at the side of the flange part 56 opposite to the fit part 54. From the side of the head part 58 opposite to the flange part 56, the cap 60 is mounted onto the gas generator mount part 48 thereby to prevent the gas generator 52 from getting out from the gas generator mount part 48. The gas generator 52 mounted on the gas generation mount part 48 generates gas instantaneously by actuation and gas is blown from the end of the fit part 54 opposite to the flange part 56.

A gas passage 62 is formed continuous from the other end of the gas generator mount hole 50 (the end opposite to the opening end in the outer face of the gas generator mount part 48). The gas passage 62 is bent at the midpoint thereof toward the opening end of the insertion hole 46. In the gas passage 62, a part of the gas passage 62 at the insertion-hole 46 side with respect to this bent part is a cylinder side passage 62A, which has an inner diameter smaller than the inner diameter of the insertion hole 46. The cylinder side passage 62A (gas passage 62) at the insertion hole 46 side has an end opening at the bottom portion 64 of the insertion hole 46. The inner diameter of the cylinder side passage 62A is almost equal to the outer diameter of the small diameter part 20. When the base end side of the cylinder 12 is inserted and fitted into the insertion hole 46 and the base end of the cylinder 12 abuts on the bottom portion 64, the small diameter part 20 is entered into the cylinder side passage 62A. Therefore, gas blown out of the gas generator 52 is guided into the gas passage 62, and the gas guided into the gas passage 62 pushes the small diameter part 20 (i.e., piston 14) toward the tip end side of the cylinder 12.

Further, in a generator side passage 62B which is a part of the gas passage 62 at the side of the gas generator mount hole 50 with respect to the bent part of the gas passage 62, a protection wall 66 is provided. The protection wall 66 is formed on the inner peripheral surface of the generator side passage 62B at the location between the opening diameter direction midpoint of the generator side passage 62B and the inner peripheral surface of the generator side passage 62B at the insertion hole 46 opening side. Hence, the gas blown out from the gas generator 52 passes through the generator side passage 62B so as to go around the gas passage 62 and flows into the cylinder side passage 62A.

Meanwhile, the base cartridge 40 has a guide part 68. The guide part 68 is formed on the side of the main body 42 opposite to the cylinder insertion part 44. In the guide part 68, a wire passage portion 70 is formed as connecting member passage. The wire passage portion 70 is formed to be along the opening direction of the cylinder passage 62A (gas passage 62) in the bottom 64 or along the opening direction of the insertion hole 46 in the cylinder insertion part 44, and an end thereof is open at the bent part of the gas passage 62 (i.e., at boundary between the cylinder side passage 62A and the generator side passage 62B). On the other hand, the other end of the wire passage portion 70 is open at the outer surface of the guide part 68 at the side opposite to the main body 42.

The wire 28 passing through the through hole 26 of the piston 14 at the opposite side of the piece 30 is drawn out outside the guide part 68, and further the base cartridge 40. At the other end side of the wire passage portion 70, the wire passage portion 70 is curved at a part of the inner surface thereof with one side in the opening diameter direction of the wire passage portion 70 as being a center of curvature. The wire 28 drawn out from the other end of the wire passage portion 70 toward the outside of the base cartridge 40 is curved along the inner peripheral surface of the wire passage portion 70 at the other end side of the wire passage portion 70.

Besides, in the gas passage 62, a wire protection tube 72 is provided corresponding to the one end of the wire passage portion 70. The wire protection tube 72 has a tube shape in which an inner peripheral shape of thereof is almost equal to the inner peripheral shape of the wire passage portion 70. The wire protection tube 72 projects from the inner wall of the gas passage 62 so as to be coaxial with the one end of the wire passage portion 70, and the wire 28 passing through the wire protection tube 72 is entered into the wire passage portion 70. The end side of the gas passage 62 faces the end side of the protection wall 66 along the blowing direction of gas from the gas generator 52. For this reason, the gas blowing out from the gas generator 52 flows to the protection wall 66 and the wire protection tube 72 and is not blown directly to the wire 28. Besides, the gas blown from the gas generator 52 interferes with the wire protection tube 72 thereby its blowing direction is changed toward the cylinder insertion part 44.

On the other hand, in the guide part 68, a packing accommodation portion 74 is formed as a sealing member accommodation portion. The packing accommodation portion 74 is formed in the midpoint of the wire passage portion 70 (i.e., between the end of the wire passage portion 70 and the other end of the wire passage portion 70). Besides, the packing accommodation portion 74, seen from the front side of the base cartridge 40, has a pair of sides opposite to each other, the sides being parallel to the part of the wire passage portion 70 in the vicinity of the packing accommodation portion 74 formed position, and has the other pair of sides opposite to each other, the sides being orthogonal to the part of the wire passage portion 70 in the vicinity of the packing accommodation portion 74 formed position. That is, the packing accommodation portion 74 has a rectangular shape. Of the inner walls of the packing accommodation portion 74 that is rectangular when seen from the front side of the base cartridge 40, a wall to the one end of the wire passage along the passing direction of the wire passage portion 70 serves as a pressure contact wall 76 as a regulation part and a wall to the other end of the wire passage portion 70 serves as a pressure contact wall 78.

This packing accommodation portion 74 opens only at an outer surface of the base cartridge 40 at the front side of the base cartridge 40 orthogonal to the passing direction of the wire passage portion 70. In the packing accommodation portion 74 opening such as mentioned above, a packing 80 is accommodated as a sealing member. The packing 80 is made of a rubber or elastic material having elasticity like the rubber or a synthetic resin having more rigidity than the elastic member, and has shape of a block where its outer peripheral shape is almost equal to the inner peripheral shape of the packing accommodation portion 74.

Here, in this embodiment, as the outer peripheral shape of the packing 80 is formed into the block similar to the inner peripheral shape of the packing accommodation portion 74, so, the packing 80 can be inserted into the packing accommodation portion 74 smoothly. However, for example, the packing 80 can be structured in such a manner that the outer peripheral shape of the packing 80 has the shape of block slightly larger than the inner peripheral shape of the packing accommodation portion 74 and the packing 80 is pushed into the packing accommodation portion 74 against the elasticity of the packing 80. With such a structure, the packing 80 uses its elasticity to be in pressure-contact with the inner wall of the packing accommodation portion 74 including the pressure wall 76 and therefore, the sealing performance by the packing 80 is enhanced.

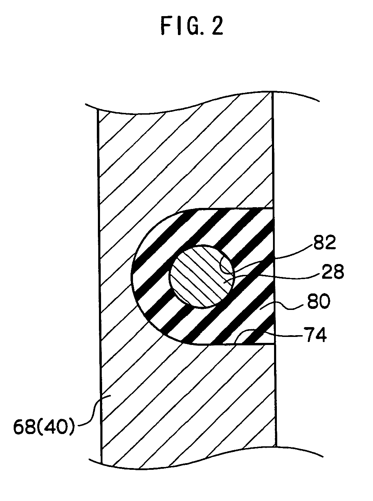

As shown in Figs. 1 and 2, the packing 80 has a through hole 82 formed therein. The through hole 82 has inner diameter almost equal to the outer diameter of the wire 28. When the packing 80 is accommodated in the packing accommodation portion 74, an end of the packing 80 is connected to the wire passage portion 70 to the one end side of the packing accommodation portion 74 and the other end of the packing 80 is connected to the wire passage portion 70 to the other end side of the packing accommodation portion 74. Hence, the wire 28 passing through the wire passage portion 70 then passes through the through hole 82 of the packing 80 inside the packing accommodation portion 74. As described above, as the inner diameter of the through hole 82 is almost equal to the outer diameter of the wire 28, when the wire 28 passes through the through hole 82, there is almost no gap made between the outer peripheral surface of the wire 28 and the inner peripheral surface of the through hole 82.

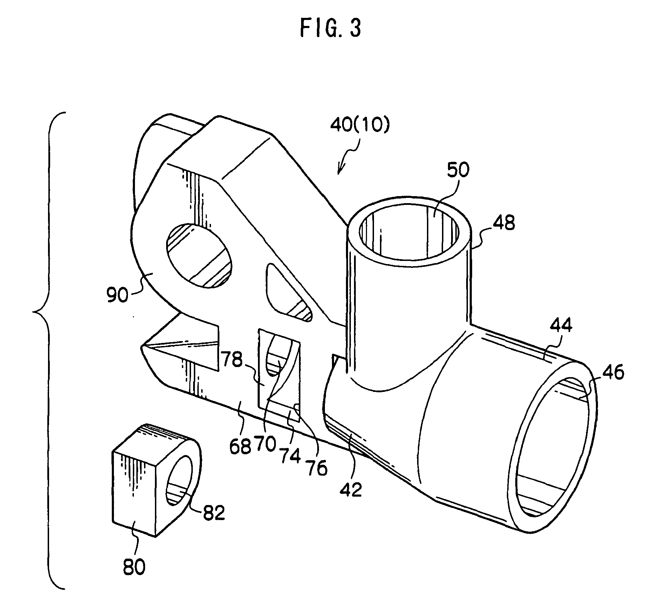

On the other hand, as shown in Fig. 3, a circular hole 90 is formed in the base cartridge 40. A securing member such as a fixing volt passes through this circular hole 90. The securing member such as a fixing volt passing through the circular hole 90 is fixed to a frame member of the seat or vehicle body and thereby the preloader 10 is mounted on the vehicle.

### <Operation and Effect of the Embodiment>

Next description is made about the operation and effect of this embodiment.

When a detecting unit such as an acceleration sensor mounted on the vehicle detects a vehicle's rapid deceleration while an occupant is sitting on a seat belting himself with a webbing belt of the seat belt device, for example, the ECU outputs an ignition signal. This ignition signal is input to the gas generator 52, then, a gassing agent in the gas generator 52 is ignited. The ignited gassing agent is burned up in a short time thereby to generate a gas abruptly.

The generated gas in this way is fed to the gas passage 62. The gas in the gas passage 62 pushes the piston 14 positioned in the vicinity of the base end of the cylinder 12 (the gas passage 62 side end of the cylinder 12) toward the tip end side of the cylinder 12 (the opposite side of the cylinder 12 to the gas passage 62). The pressure of the gas thus given to the piston 14 makes the piston 14 push the piece 30 toward the tip end side of the cylinder 12 and slide toward the tip end of the cylinder 12.

When the wire 28 is pulled by the piece 30 sliding in this way, the anchor plate 34 or buckle 38 fixed to the end of the wire 28 is pulled thereby to give a tension to the webbing belt 36 worn on the occupant in the vehicle. As the tension is given to the webbing belt 36, the slight slack of the webbing belt 36 is removed to strengthen the restraint force of the webbing belt 36 for keeping the occupant body restrained and to be able to restrain the occupant body stronger.

Here, as described above, a gas generated in the gas generator 52 and sent into the gas passage 62 tries to flow to the end of the wire passage portion 70 which is open at the inner surface of the gas passage 62. However, there is almost no space given between the outer peripheral part of the wire 28 and the inner peripheral part of the through hole 82 of the packing 80 through which the wire 28 passes in the midpoint of the wire passage portion 70. Hence, the gas is prevented from passing through the wire passage portion 70 and leaking from the other end of the wire passage portion 70 to the outside of the base cartridge 40 and/or such gas leakage is effectively suppressed. This makes it possible to make effective use of the pressure of the above-mentioned gas in pushing the piston 14.

Besides, as described above, when the wire 28 is pulled, the packing 80 is also pulled to move by the wire 28. However, the pressure wall 76 of the packing accommodation portion 74 is placed against the packing 80 in the direction where the packing 80 moves. When the packing 80 tries to move by pulling by the wire 28, the packing 80 is pressed against the pressure wall 76. Therefore, even when the wire 28 is pulled to move as mentioned above, the packing 80 is prevented from moving unnecessarily and it becomes possible to prevent or extremely effectively suppress lowering of the sealing performance of the packing 80 due to movement of the packing 80, and also to effectively seal the gap between the pressure wall 76 and packing 80 due to the packing 80 being pressed against the pressure wall 76, thereby enhancing the sealing performance further.

In addition, as the packing accommodation portion 74 where the packing 80 is accommodated is open at the front side outer surface of the base cartridge 40, so, if the packing 80 tries to move in the moving direction of the wire 28, the packing 80 is prevented from coming out from the packing accommodation portion 74. Therefore, there is basically no need to provide any stopper or the like structure for holding the packing 80 inside the packing accommodation portion 74.

Meanwhile, as described above, when the gas generated in the gas generator 52 is sent into the gas passage 62, the gas interferes with the protection wall 66 and further interferes with the wire protection tube 72 and changes in direction to flow to the cylinder insertion part 44 side. Hence, the gas generated and injected from the gas generator 52 is prevented from being blown onto the wire 28 directly and it becomes possible to protect the wire from the gas heat effectively.

Besides, this preloader 10 has such protection wall 66 and wire protection tube 72 formed at the gas passage 62, but the packing 80 is not provided on the gas passage 62. This makes it possible to form the protection wall 66 and the wire protection tube 72 at the gas passage 62 without upsizing the gas passage 62, or even the base cartridge 40.

Meanwhile, in a state in which when the wire 28 is pulled and the anchor plate 34 or buckle 38 give the webbing belt 36 tension, when the webbing belt 36 is pulled by a large force by the body of the occupant, the wire 28 is pulled by the anchor plate 34 or buckle 38 and the piece 30 moves toward the base end of the cylinder 12. The thus-moving piece 30 pushes the piston 14 to move toward the base end of the cylinder 12.

In this way, when the piston 14 moves, each clutch ball 24 moves on the outer peripheral surface (inclined surface) of the piston main body 16 by inertia. Then, the clutch ball 24 is sandwiched between the inner peripheral part of the cylinder 12 and the outer peripheral part of the piston main body 16. When the piston 14 is moved further in this state, the clutch ball 24 sandwiched between the outer peripheral part of the piston main body 16 and the inner peripheral part of the cylinder 12 is pressed and crushed, and deformed, and thereby the friction between the outer peripheral part of the piston man body 16 and each clutch ball 24 and the friction between the inner peripheral part of the cylinder 12 and each clutch ball 24 are increased. Then, movement of the piston 14 toward the base end of the cylinder 12 is restricted and further, movement of the occupant body pulling the webbing belt 36 is restrained.

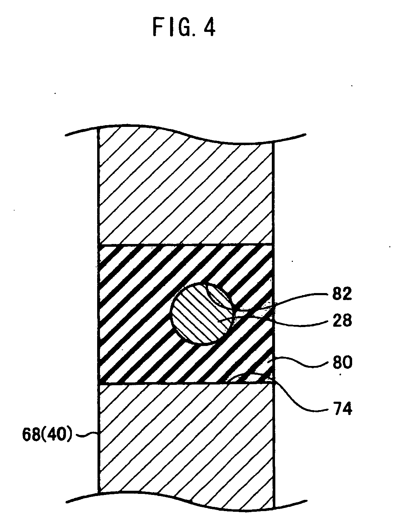

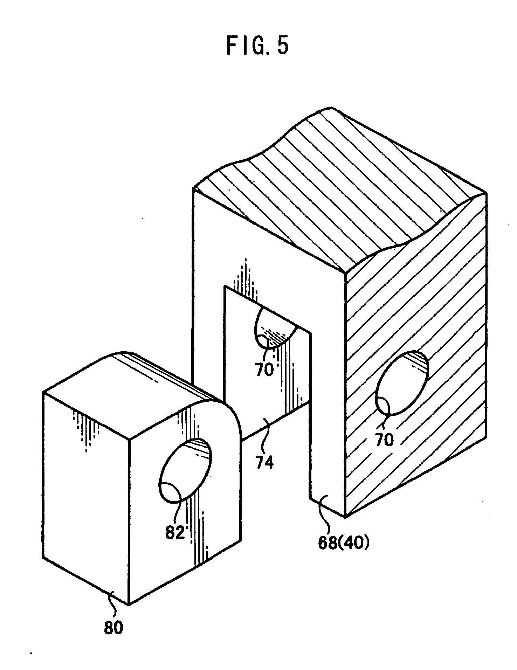

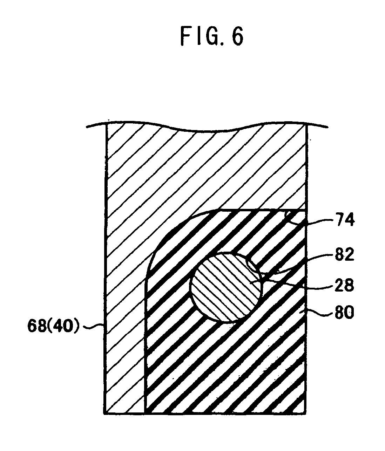

Here, in this embodiment, the packing accommodation portion 74 is structured to open only at the front side outer surface of the base cartridge 40 orthogonal to the passing direction of the wire passage portion 70. However, it may be structured to open at both of the front side outer surface and back side outer surface of the base cartridge 40 orthogonal to the passing direction of the wire passage portion 70 as shown in Fig. 4. Besides, as shown in Figs. 5 and 6, it may be structured to open at both the front side outer surface and the bottom outer surface of the base cartridge 40.

If the packing accommodation portion 40 is structured in this way, for example, when the packing 80 is fitted (inserted) or pushed into the packing accommodation portion 74 from the front side of the base cartridge 40, air inside the packing accommodation portion 74 gets out via the opening of the packing accommodation portion 74 at the back side or bottom side of the base cartridge 40 so that the packing 80 can be easily inserted or pushed into the packing accommodation portion 74. Particularly, in the structure as shown in Figs. 5 and 6, the opening of the packing accommodation portion 74 at the front side outer surface of the base cartridge 40 is linked to (communicates to) the opening of the packing accommodation portion 74 at the bottom side outer surface. For this reason, in the structure as shown in Figs. 5 and 6, the packing 80 can be attached into the packing accommodation portion 74 from the direction downwardly inclined relative to the front side of the base cartridge 40, and therefore, good workability of attaching the packing 80 into the packing accommodation portion 74 is achieved.

Furthermore, in this embodiment, the packing 80 is structured to be fully accommodated in the packing accommodation portion 74. However, for example, basically, the packing 80 is entirely accommodated in the packing accommodation portion 74. However, for example, on an end surface of the packing 80 that is directed the front side of the base cartridge 40 in a state in which the packing 80 is accommodated in the packing accommodation portion 74, there may be provided a flange part 102 sufficiently larger than the opening shape of the packing accommodation portion 74 at the front side of the base cartridge 40, which flange part 102 may be structured to be in contact with the front side outer surface of the base cartridge 40 when the packing 80 is accommodated in the packing accommodation portion 74.

In this way, with the structure having the flange part 102 on the packing 80, even if gas may leak from a gap between the outer surface of the packing 80 and the inner surface of the packing accommodation portion 74, the leakage of the gas is restrained (regulated) by the flange part 102, that is, the gas cannot leak unless the gas flows through the gap between the front side outer surface of the base cartridge 40 and the flange part 102. This is further effectively conducive to gas's pushing of the piston 14.

## Claims

1. A preloader (10) comprising:
a cylinder (12) that slidably accommodates therein a piston (14);
a connecting member (28), one end portion of which is connected to
an anchor to which a one end portion in a longitudinal direction of a webbing belt of a seat belt device is connected, or
a buckle to which a tongue provided at an intermediate portion in the longitudinal-direction of the webbing belt is attached, and
the other end portion of which is pulled by the piston (14) sliding inside the cylinder (12) from one end of the cylinder to the other end of the cylinder;
a preloader main body (40) in which a connecting member passage (70) is formed and to which the one end of the cylinder (12) is attached, the connecting member passage (70) having another end opening at an outer surface of the preloader main body (40) and the connecting member (28) passing inside the connecting member passage (70);
a gas passage (62) that is formed in the preloader main body (40) such that one end of the gas passage (62) communicates to the one end of the cylinder (12) and one end of the connecting member passage (70) is opened at an intermediate portion of the gas passage (62);
a gas generating unit (52), attached to the other end of the gas passage (62), that generates gas by being activated to send the generated gas into the gas passage (62); and
a scaling member (80) that is accommodated in a sealing member accommodation portion (74) formed in the preloader main body (40), the sealing member sealing a portion between the one end of the connecting member passage (70) and the other end of the connecting member passage (70),
**characterized in that**
the sealing member accommodation portion (74) is formed in the preloader main body (40) at an intermediate portion of the connecting member passage (70), and
the sealing member accommodation portion (74) opens, at the outer surface of the preloader main body (40) which is directed in a direction crossing a passage direction of the connecting member (28) in the sealing member accommodation portion (74), at such a size that the sealing member (80) can be accommodated in the sealing member accommodation portion (74).

2. The preloader of claim 1, further comprising a regulating portion (76) facing the sealing member (80) at the one end side of the connecting member passage (70), that regulates moving of the sealing member (80) toward the one end side of the connecting member passage (70) by interfering with the sealing member.

3. The preloader of claim 1 or 2, wherein a flange part (102), that has a shape larger than an opening shape of the sealing member accommodation portion (74) when seen in the direction crossing the passage direction of the connecting member (28) in the sealing member accommodation portion (74), is formed at the sealing member (28), and the flange part (102) contacts the outer surface of the preloader main body (40) in a state in which the sealing member (28) is accommodated in the sealing member accommodation portion (74).

4. The preloader of claim 1, 2 or 3, wherein an opening is further formed at an outer surface of the preloader main body (40) that is opposite to the outer surface of the preloader main body which is directed in the direction crossing the passage direction of the connecting member (28) in the sealing member accommodation portion (74).

5. The preloader of claim 1, 2 or 3, wherein an opening is further formed at an outer surface of the preloader main body (40) that crosses to the outer surface of the preloader main body which is directed in the direction crossing the passage direction of the connecting member (28) in the scaling member accommodation portion (74).

6. The preloader of claim 4 or 5, wherein both the openings are communicated with each other.

## Patentansprüche

1. Vorspanneinrichtung (10), die aufweist:
einen Zylinder (12, der einen Kolben (14) gleitend aufnimmt;
ein Verbindungselement (28), dessen ein Ende mit
einer Verankerung, mit der ein Endabschnitt in einer Längsrichtung eines Gurtbandes einer Sicherheitsgurtvorrichtung verbunden ist, oder
einem Schloss, an dem eine an einem Zwischenabschnitt in der Längsrichtung des Gurtbandes vorgesehene Zunge angebracht ist, verbunden ist und
dessen anderer Endabschnitt durch den Kolben (14) gezogen wird, der im Inneren des Zylinders (12) von einem Ende des Zylinders zu dem anderen Ende des Zylinders gleitet;
einen Hauptkörper (40) der Vorspanneinrichtung, in dem ein Verbindungselementkanal (70) ausgebildet ist und an dem das eine Ende des Zylinders (12) befestigt ist, wobei der Verbindungselementkanal (70) eine andere Endöffnung an einer Außenfläche des Hauptkörpers (40) der Vorspanneinrichtung aufweist und das Verbindungselement (28) im Inneren des Verbindungselementkanals (70) verläuft;
einen Gaskanal (62), der in dem Hauptkörper (40) der Vorspanneinrichtung derart ausgebildet ist, dass das eine Ende des Gaskanals (62) mit dem einen Ende des Zylinders (12) kommuniziert und ein Ende des Verbindungselementkanals (70) an einem Zwischenabschnitt des Gaskanals (62) geöffnet ist;
eine an dem anderen Ende des Gaskanals (62) befestigte Gaserzeugungseinheit (52), die, indem sie aktiviert wird, Gas erzeugt, um das erzeugte Gas in den Gaskanal (62) zu liefern; und
ein Dichtungselement (80), das in einem Dichtungselementaufnahmeabschnitt (74) aufgenommen ist, der in dem Hauptkörper (40) der Vorspanneinrichtung ausgebildet ist, wobei das Dichtungselement einen Abschnitt zwischen dem einen Ende des Verbindungselementkanals (70) und dem anderen Ende des Verbindungselementkanals (70) abdichtet,
**dadurch gekennzeichnet, dass**
der Dichtungselementaufnahmeabschnitt (74) in dem Hauptköper (40) der Vorspanneinrichtung an einem Zwischenabschnitt des Verbindungselementkanals (70) ausgebildet ist und
der Dichtungselementaufnahmeabschnitt (74) sich an der Außenfläche des Hauptkörpers (40) der Vorspanneinrichtung, die in eine eine Durchgangsrichtung des Verbindungselementes (28) in dem Dichtungselementaufnahmeabschnitt (75) kreuzende Richtung gerichtet ist, mit einer derartigen Größe öffnet, dass das Dichtungselement (80) in dem Dichtungselementaufnahmeabschnitt aufgenommen werden kann.

2. Vorspanneinrichtung nach Anspruch 1, die ferner einen dem Dichtungselement (80) an der einen Endseite des Verbindungselementkanals (70) zugewandten Regulierabschnitt (76) aufweist, der eine Bewegung des Dichtungselementes (80) zu der einen Endseite des Verbindungselementkanals (70) durch Wechseleingriff mit dem Dichtungselement bestimmt.

3. Vorspanneinrichtung nach Anspruch 1 oder 2, wobei der Flanschteil (102), der eine Gestalt aufweist, die größer ist als eine Öffnungsgestalt des Dichtungselementaufnahmeabschnitts (74), betrachtet in der die Durchgangsrichtung des Verbindungselementes (28) in dem Dichtungselementaufnahmeabschnitts (74) kreuzenden Richtung, an dem Dichtungselement (28) ausgebildet ist und der Flanschteil (102) in einem Zustand, in dem das Dichtungselement (28) in dem Dichtungselementaufnahmeabschnitt (74) aufgenommen ist, mit der Außenfläche des Hauptkörpers (40) der Vorspanneinrichtung in Kontakt steht.

4. Vorspanneinrichtung nach Anspruch 1, 2 oder 3, wobei eine Öffnung ferner an einer Außenfläche des Hauptkörpers (40) der Vorspanneinrichtung ausgebildet ist, die zu der Außenfläche des Hauptkörpers der Vorspanneinrichtung, die in der die Durchgangsrichtung des Verbindungselementes (28) in dem Dichtungselementaufnahmeabschnitt (74) kreuzenden Richtung gerichtet ist, gegenüber liegt.

5. Vorspanneinrichtung nach Anspruch 1, 2 oder 3, wobei eine Öffnung ferner an einer Außenfläche des Hauptkörpers (40) der Vorspanneinrichtung ausgebildet ist, die die Außenfläche des Hauptkörpers der Vorspanneinrichtung kreuzt, die in der die Durchgangsrichtung des Verbindungselementes (28) in dem Dichtungselementaufnahmeabschnitt (74) kreuzenden Richtung ausgerichtet ist.

6. Vorspanneinrichtung nach Anspruch 4 oder 5, wobei beide Öffnungen miteinander kommunizieren.

## Revendications

1. Dispositif de préchargement (10), comprenant :
un cylindre (12) dans lequel un piston (14) est reçu avec faculté de coulissement ;
un organe de raccordement (28), dont une portion d'extrémité est raccordée à
- un ancrage auquel une portion d'extrémité dans une direction longitudinale d'une bande de ceinture d'un dispositif de ceinture de sécurité est raccordée, ou
- une boucle à laquelle une langue est fournie au niveau d'une portion intermédiaire dans la direction longitudinale la ceinture en bande est attachée, et
dont l'autre portion d'extrémité est tirée par le piston (14) coulissant à l'intérieur du cylindre (12) d'une extrémité du cylindre à l'autre extrémité du cylindre ;
un corps principal de dispositif de préchargement (40) dans lequel un passage d'organe de raccordement (70) est formé et auquel une extrémité du cylindre (12) est attachée, le passage d'organe de raccordement (70) ayant une autre extrémité s'ouvrant au niveau d'une surface externe du corps principal de dispositif de préchargement (40) et l'organe de raccordement (28) passant à l'intérieur du passage d'organe de raccordement (70) ;
un passage de gaz (62) qui est formé dans le corps principal de dispositif de préchargement (40) de sorte qu'une extrémité du passage de gaz (62) communique avec l'extrémité du cylindre (12) et une extrémité du passage d'organe de raccordement (70) est ouverte au niveau d'une portion intermédiaire du passage de gaz (62) ;
une unité de génération de gaz (52), attachée à l'autre extrémité du passage de gaz (62), qui génère un gaz en étant activée pour envoyer le gaz généré dans le passage de gaz (62) ; et
un organe d'étanchéité (80) qui est logé dans une portion de logement d'organe d'étanchéité (74) formée dans le corps principal de dispositif de préchargement (40),
l'organe d'étanchéité rendant étanche une portion entre une extrémité du passage d'organe de raccordement (70) et l'autre extrémité du passage d'organe de raccordement (70),
**caractérisé en ce que**
la portion de logement de raccordement (74) est formée dans le corps principal de dispositif de préchargement (40) au niveau d'une portion intermédiaire du passage d'organe de raccordement (70), et
la portion de logement d'organe de raccordement (70) s'ouvre, au niveau de la surface externe du corps principal de dispositif de préchargement (40) qui est dirigée dans une direction croisant une direction de passage de l'organe de raccordement (28) dans la portion de logement de raccordement (74), à une taille telle que l'organe d'étanchéité (80) peut être logé dans la portion de logement d'organe d'étanchéité (74).

2. Dispositif de préchargement selon la revendication 1, comprenant en outre une portion de régulation (76) face à l'organe d'étanchéité (80) du côté d'une extrémité du passage d'organe de raccordement (70), qui régule le mouvement de l'organe d'étanchéité (80) vers ce côté d'extrémité du passage d'organe de raccordement (70) par interférence avec l'organe d'étanchéité.

3. Dispositif de préchargement selon la revendication 1 ou 2, dans lequel une partie de bride (102), qui a une forme plus grande qu'une forme d'ouverture de la portion de logement d'organe d'étanchéité (74) lorsqu'elle est vue dans la direction croisant la direction de passage de l'organe de raccordement (28) dans la portion de logement d'organe d'étanchéité (74), est formée au niveau de l'organe d'étanchéité (28), et la partie de bride (102) est en contact avec la surface externe du corps principal de dispositif de préchargement (40) dans un état dans lequel l'organe d'étanchéité (28) est logé dans la portion de logement d'organe d'étanchéité (74).

4. Dispositif de préchargement selon la revendication 1, 2 ou 3, dans lequel une ouverture est en outre formée au niveau d'une surface externe du corps principal de dispositif de préchargement (40) qui est opposée à la surface externe du corps principal de dispositif de préchargement qui est dirigée dans la direction croisant la direction de passage de l'organe de raccordement (28) dans la portion de logement d'organe d'étanchéité (74).

5. Dispositif de préchargement selon la revendication 1, 2 ou 3, dans lequel une ouverture est en outre formée au niveau d'une surface externe du corps principal de dispositif de préchargement (40) qui croise la surface externe du corps principal de dispositif de préchargement qui est dirigée dans la direction croisant la direction de passage de l'organe de raccordement (28) dans la portion de logement d'organe d'étanchéité (74).

6. Dispositif de préchargement selon la revendication 4 ou 5, dans lequel les deux ouvertures sont mises en communication l'une avec l'autre.
